# EUROPEAN PATENT APPLICATION

(11) **EP 4 510 691 A1**
(43) Date of publication of application: **19.02.2025**
(21) Application number: 23838634.6
(22) Date of filing: 14.06.2023
(51) Int. Cl.: H04W 24/10

(54) **DATA TRANSMISSION METHOD AND DEVICE**

(30) Priority: 12.07.2022 CN 202210817105
(71) Applicant: Huawei Technologies Co., Ltd., Shenzhen, Guangdong 518129 (CN)
(72) Inventor: XU, Rui, Shenzhen, Guangdong 518129 (CN); CHEN, Erkai, Shenzhen, Guangdong 518129 (CN); QIN, Yi, Shenzhen, Guangdong 518129 (CN); CAO, Youlong, Shenzhen, Guangdong 518129 (CN)
(74) Representative: MERH-IP Matias Erny Reichl Hoffmann Patentanwälte PartG mbB
(86) International application number: PCT/CN2023/100286
(87) International publication number: WO 2024/012140

(57) **Abstract**

A data transmission method and apparatus are provided. A terminal can estimate and report an estimated data volume in a specific period of time, so that a radio access network device can schedule uplink data of the terminal in a more timely manner. In this way, a data transmission delay is reduced, and terminal user experience is improved.

## Description

### CROSS-REFERENCE TO RELATED APPLICATIONS

This application claims priority to Chinese Patent Application No. 202210817105.0, filed with the China National Intellectual Property Administration on July 12, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In a wireless communication network, an extended reality (extended reality, XR) technology has advantages of multiple perspectives and intense interaction, providing brand-new visual experience for a user, and has great application value and commercial potential. XR includes technologies such as virtual reality (virtual reality, VR), augmented reality (augmented reality, AR), mixed reality (mix reality, MR), and the like, and can be widely applied to many fields such as entertainment, gaming, medical care, advertising, industry, online education, and engineering.

XR data has a higher requirement on a transmission delay. Therefore, how to efficiently utilize limited wireless resources to reduce the transmission delay of the XR data is a problem to be urgently resolved.

### SUMMARY

According to a first aspect, an embodiment of this application provides a data transmission method. The method may be performed by a terminal, may be performed by a component (for example, a processor, a chip, a chip system, or the like) of a terminal, or may be implemented by a logical module or software that can implement all or some functions of a terminal. The method includes: sending a buffer status report (buffer status report, BSR) to a network device, where the BSR indicates a data volume (N1+N2), N1 indicates a current data volume in a buffer of the terminal, N2 indicates an estimated data volume of the terminal within a time interval T1, N1≥0, N2≥0, and T1>0; receiving scheduling information from the network device; and sending data to the network device based on the scheduling information, where the data includes data corresponding to the current data volume and/or data corresponding to the estimated data volume. According to the method, the terminal may estimate and report an estimated data volume in a future period of time to the network device, so that the network device can schedule uplink data sending in a more timely manner based on the estimated data volume. In this way, a data transmission delay is reduced, and terminal user experience is improved.

With reference to the first aspect, in some implementations of the first aspect, T1 is predefined, or T1 is configured by the network device.

When T1 is configured by the network device for the terminal, there may be a plurality of different configuration methods. For example, T1 is indicated by using physical layer signaling, or T1 is configured by using higher layer signaling. It may be understood that, the physical layer signaling in this application may be, for example, downlink control information (downlink control information, DCI) carried on a physical downlink control channel (physical downlink control channel, PDCCH). The higher layer signaling in this application may be, for example, a media access control (media access control, MAC) control element (control element, CE), or may be radio resource control (radio resource control, RRC) signaling. For another example, T1 is configured by using physical layer signaling and higher layer signaling.

When the network device configures T1 for the terminal, the network device may configure the required time interval T1 based on a load status. For example, in a light-load state, a longer time interval T1 may be configured, to schedule uplink data of the terminal in a more timely manner; or in a heavy-load state, a shorter time interval T1 may be configured, to avoid a waste of resources and schedule uplink data of the terminal as soon as possible. Alternatively, the network device may configure the required time interval T1 based on a requirement on a quality of service (quality of service, QoS) of a current service flow. For example, if a packet delay budget (packet delay budget, PDB) required by the QoS of the current service flow is small, a longer time interval T1 may be configured and the uplink data of the terminal may be scheduled in a timely manner; or if a PDB required by the QoS of the current service flow is large, a shorter time interval T1 may be configured to avoid a waste of wireless transmission resources.

With reference to the first aspect, in some implementations of the first aspect, T1 is a time interval between a time unit in which the BSR is sent and a next uplink time unit that meets a condition. This may be understood as that T1 may alternatively meet a predefined rule. Optionally, a downlink time unit is included between the next uplink time unit that meets the condition and the time unit in which the BSR is sent, and a time interval between the downlink time unit and the uplink time unit that meets the condition is greater than or equal to a minimum time interval for scheduling uplink data sending. The time unit in this application may be one or more radio frames, one or more subframes, one or more slots, or one or more time domain symbols. The uplink time unit is a time unit used to carry an uplink signal or uplink information, and the downlink time unit is a time unit used to carry a downlink signal or downlink information.

In the predefined rule of T1, the downlink time unit included between the next uplink time unit that meets the condition and the time unit in which the BSR is sent may be understood as a time unit that can be used to send scheduling information, and the next uplink time unit that meets the condition may be understood as a next time unit that meets the condition and that is used to send uplink data. The minimum time interval for scheduling uplink data sending may be understood as a minimum time interval that needs to exist between receiving the scheduling information by the terminal and sending the uplink data scheduled by using the scheduling information. After receiving the information for scheduling uplink data sending, the terminal needs a specific preparation period of time to perform an operation such as packet assembly before sending the uplink data. Therefore, the uplink data can be sent only after at least the minimum time interval.

It may be understood that, when T1 is configured by the network device, the configured T1 may also meet the foregoing predefined rule.

According to the predefined rule of T1, the uplink data of the terminal can be scheduled in a more timely manner without wasting time-frequency resources. In this way, a data transmission delay is reduced, and terminal user experience is improved.

With reference to the first aspect, in some implementations of the first aspect, the method further includes: determining the estimated data volume based on a data periodicity, a packet size of the data, and a previous arrival time of the data; or determining the estimated data volume based on a data periodicity and a previous arrival time of the data. It may be understood that, the estimated data volume N2 may be greater than 0 (that is, there may be new data in the time interval T1), or may be equal to 0 (that is, there may be no new data in the time interval T1). It indicates that the terminal may estimate the estimated data volume N2 based on a related parameter of service data. It may be understood that, the related parameters of the service data include but are not limited to the foregoing several types. In this manner, the estimated data volume N2 is estimated, so that the data volume N2 in the time interval T1 can be more accurately estimated, and the uplink data of the terminal can be scheduled in a timely manner, to reduce a data transmission delay, and reduce a waste of transmission resources and an extra transmission delay caused by inaccurate estimation.

With reference to the first aspect, in some implementations of the first aspect, the related parameter of the service data may be obtained in a plurality of different manners. For example, the related parameter of the service data may be obtained by using configuration information of a QoS flow corresponding to the data, for example, a QoS rule (QoS rule). For another example, the related parameter of the service data may be obtained by detecting a data packet in a QoS flow. For another example, service feature information of application layer data may be notified to a protocol layer (for example, an RRC layer or a MAC layer) below the application layer of the terminal through interaction between protocol layers, so that the protocol layer below the application layer of the terminal can obtain the related parameter of the service data.

With reference to the first aspect, in some implementations of the first aspect, the BSR is carried by a first MAC protocol data unit (protocol data unit, PDU), the first MAC PDU further includes a logical channel identifier, and the logical channel identifier is used to identify the BSR. The BSR may be understood as a newly defined BSR format. In this implementation, impact on an existing MAC CE can be reduced, to simplify implementation.

With reference to the first aspect, in some implementations of the first aspect, the BSR is carried by a second MAC PDU, the second MAC PDU further includes a reserved field, and the reserved field is used to identify the BSR. The BSR may be understood as an original BSR format. In this implementation, no new BSR format or extra indication overheads need to be introduced.

With reference to the first aspect, in some implementations of the first aspect, the sending a BSR to a network device includes: periodically sending the BSR to the network device. In this implementation, a to-be-transmitted uplink data volume can be reported in a timely manner, and the uplink data can be scheduled in a timely manner. In this way, a data transmission delay is reduced.

With reference to the first aspect, in some implementations of the first aspect, the sending a BSR to a network device includes: sending the BSR to the network device when there is remaining data in the buffer of the terminal that has not been transmitted, or when a data packet is expected to arrive within the time interval T1. In this implementation, a to-be-transmitted uplink data volume can be reported in a timely manner, and the uplink data can be scheduled in a timely manner. In this way, a data transmission delay is reduced.

According to a second aspect, an embodiment of this application provides a data transmission method. The method may be performed by a network device, may be performed by a component (for example, a processor, a chip, a chip system, or the like) of a network device, or may be implemented by a logical module or software that can implement all or some functions of a network device. The method includes: receiving a BSR from a terminal, where the BSR indicates a data volume (N1+N2), N1 indicates a current data volume in a buffer of the terminal, N2 indicates an estimated data volume of the terminal within a time interval T1, N1≥0, N2≥0, and T1>0; and sending scheduling information to the terminal, where the scheduling information schedules data transmission, and the data includes data corresponding to the current data volume and/or data corresponding to the estimated data volume.

With reference to the second aspect, in some implementations of the second aspect, T1 is predefined, or T1 is configured by the network device.

With reference to the second aspect, in some implementations of the second aspect, T1 is a time interval between a time unit in which the BSR is received and a next uplink time unit that meets a condition. Optionally, a downlink time unit is included between the next uplink time unit that meets the condition and the time unit in which the BSR is received, and a time interval between the downlink time unit and the uplink time unit is greater than or equal to a minimum time interval for scheduling uplink data sending.

With reference to the second aspect, in some implementations of the second aspect, the BSR is carried by a first MAC PDU, the first MAC PDU further includes a logical channel identifier, and the logical channel identifier is used to identify the BSR.

With reference to the second aspect, in some implementations of the second aspect, the BSR is carried by a second MAC PDU, the second MAC PDU further includes a reserved field, and the reserved field is used to identify the BSR.

With reference to the second aspect, in some implementations of the second aspect, the receiving a BSR from a terminal includes: periodically receiving the BSR from the terminal.

With reference to the second aspect, in some implementations of the second aspect, the sending scheduling information to the terminal includes: sending the scheduling information to the terminal based on the BSR. For example, if a radio access network device learns, by receiving the BSR, that the terminal has to-be-sent data of the data volume (N1+N2), the radio access network device may allocate, to the terminal, a resource that can carry the data volume (N1+N2), and send resource allocation information of the resource to the terminal by adding the resource allocation information to the scheduling information. After receiving the resource allocation information, the terminal may send the data corresponding to the data volume (N1+N2) by using the resource. In the foregoing manner, the network device may allocate, to the terminal in advance based on the BSR reported by the terminal, plenty of resources for carrying remaining data of the terminal and estimated data in a future period of time, so that the terminal can be prevented from occupying limited wireless resources to send the BSR again. In this way, a data transmission delay is reduced, and terminal user experience is improved.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus can be implemented by software and/or hardware. For example, the apparatus may be a terminal, may be a chip, a chip system, a processor, or the like that supports a terminal in implementing the method, or may be a logical module or software that can implement all or some functions of a terminal.

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus can be implemented by software and/or hardware. For example, the apparatus may be a network device, or may be a chip, a chip system, a processor, or the like that supports a network device in implementing the method, or may be a logical module or software that can implement all or some functions of a network device.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of features corresponding to the first aspect in the second aspect to the thirteenth aspect, refer to related descriptions in the first aspect. Details are not repeatedly described again.

### BRIEF DESCRIPTION OF DRAWINGS

FIG. 1 is a diagram of a communication system to which an embodiment is applied according to this application;
FIG. 2 to FIG. 5 are diagrams of several system frameworks to which embodiments of this application are applicable;
FIG. 6 is a diagram of a data transmission method according to an embodiment of this application;
FIG. 7 and FIG. 8 are diagrams of T1 according to an embodiment of this application;
FIG. 9 is a diagram of data transmission according to an embodiment of this application;
FIG. 10 is a diagram of a structure of a terminal according to an embodiment of this application;
FIG. 11 is a diagram of a structure of an apparatus according to an embodiment of this application; and
FIG. 12 is a diagram of another apparatus according to an embodiment of this application.

### DESCRIPTION OF EMBODIMENTS

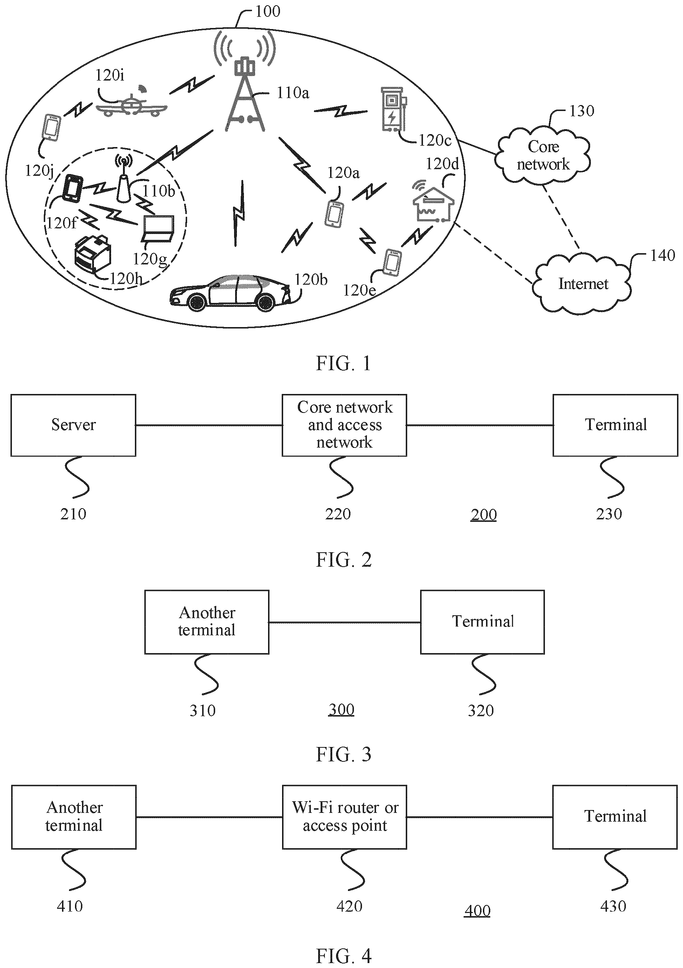

FIG. 1 is a diagram of an architecture of a communication system to which an embodiment of this application is applied. As shown in FIG. 1, the communication system includes a radio access network 100 and a core network 130. Optionally, the communication system 1000 may further include an internet 140. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different devices independent of each other, functions of a core network device and logical functions of the radio access network device are integrated into a same device, or some functions of a core network device and some functions of the radio access network device are integrated into one device. Terminals may be connected to each other in a wired or wireless manner, and radio access network devices may be connected to each other in a wired or wireless manner. FIG. 1 is merely a diagram. The communication system may further include another network device, for example, may further include a relay device and a backhaul device that are not shown in FIG. 1.

A method and an apparatus that are provided in embodiments of this application may be applied to various communication systems, for example, a 4th generation (4th generation, 4G) communication system, a 4.5G communication system, a 5G communication system, a 5.5G communication system, a 6G communication system, a system integrating a plurality of communication systems, or a future evolved communication system. The various communication systems are, for example, a long-term evolution (long-term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The radio access network device (which is also referred to as a network device sometimes in this application) may be a base station (base station), an evolved NodeB (evolved NodeB, eNodeB), a transmission reception point (transmission reception point, TRP), a next-generation NodeB (next-generation NodeB, gNB) in a 5G mobile communication system, a next-generation base station in a 6G mobile communication system, a base station in a future mobile communication system, an access node in a Wi-Fi system, or the like, or may be a module or a unit that completes some functions of a base station, for example, may be a central unit (central unit, CU) or a distributed unit (distributed unit, DU). The radio access network device may be a macro base station (for example, 110a in FIG. 1), a micro base station or an indoor base station (for example, 110b in FIG. 1), a relay node, a donor node, or the like. It may be understood that, all or some functions of the radio access network device in this application may alternatively be implemented by using a software function running on hardware, or may be implemented by using a virtualization function instantiated on a platform (for example, a cloud platform). A specific technology and a specific device form used for the radio access network device are not limited in embodiments of this application. For ease of descriptions, the following provides descriptions by using an example in which the base station is used as a radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine type communication, MTC), internet of things (internet of things, IoT), virtual reality, augmented reality, industrial control, self-driving, telemedicine, a smart grid, smart furniture, smart office, smart wearables, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form used for the terminal are not limited in embodiments of this application.

The terminal in this application may alternatively be a VR terminal, an AR terminal, or an MR terminal. The VR terminal, the AR terminal, and the MR terminal each may be referred to as an XR terminal. The XR terminal may be, for example, a head-mounted device (for example, a helmet or glasses), an all-in-one machine, or a television, a display, a car, an in-vehicle device, a tablet computer, a smart screen, or the like. The XR terminal can present XR data to a user, and the user can experience diversified XR services by wearing or using the XR terminal. The XR terminal may access a network in a wireless or wired manner, for example, access the network via the Wi-Fi system, the 5G system, or another system.

The base station and the terminal may be fixed or mobile. The base station and the terminal may be deployed on the land, including an indoor device, an outdoor device, a hand-held device, or an in-vehicle device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a radio air interface protocol. Certainly, 110a and 120i may alternatively communicate with each other based on an interface protocol between base stations. In this case, for 110a, 120i is also a base station. Therefore, the base station and the terminal may be collectively referred to as a communication apparatus, 110a and 110b in FIG. 1 each may be referred to as a communication apparatus with a function of a base station, and 120a to 120j in FIG. 1 each may be referred to as a communication apparatus with a function of a terminal.

Communication may be performed between a base station and a terminal, between base stations, or between terminals by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including a function of the base station. The control subsystem including the function of the base station may be a control center in an application scenario of the foregoing terminal, such as a smart grid, industrial control, smart transportation, and a smart city. A function of the terminal may alternatively be performed by a module (for example, a chip or a modem) in the terminal, or may be performed by an apparatus including a function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to the terminal, where the sidelink information is carried on a sidelink channel. The information may be control information, or may be data information.

An XR technology has advantages of multiple perspectives and intense interaction, providing brand-new experience for a user, and has great application value and commercial potential. XR includes technologies such as VR, AR, MR, and the like, and can be widely applied to many fields such as entertainment, gaming, medical care, advertising, industry, online education, and engineering. The VR technology is mainly to render visual and audio scenarios to simulate sensory stimulation of vision and audio in a real world to a user as much as possible. The VR technology usually requires the user to wear an XR terminal (for example, a head-mounted device) to simulate vision and/or hearing of the user. The VR technology may further perform action tracking on the user, to update simulated visual and/or auditory content in a timely manner. The AR technology is mainly to provide additional visual and/or auditory information or manually generated content in a real environment perceived by the user. The user may directly (where for example, sensing, processing, and rendering is not performed) or indirectly (where for example, transfer is performed through a sensor or the like) perceive the real environment, and further enhancement processing is performed. The MR technology is to insert some virtual elements into a physical scenario, to provide immersive experience for the user by adding the elements as a part of a real scenario.

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be briefly referred to as a transport network 220, for example, an LTE network, a 5G network, or a 6G network), and a terminal 230. The server 210 may be configured to: encode, decode, and render XR source data. The transport network 220 may be configured to transmit the XR data. The terminal 230 provides diversified XR experience for a user by processing the XR data. It may be understood that, another apparatus may be further included between the transport network 220 and the terminal 230. For example, another terminal (for example, a mobile phone, a notebook computer, or an in-vehicle terminal) and/or a network device (for example, a relay device, an integrated access backhaul (integrated access backhaul, IAB) device, a Wi-Fi router, a Wi-Fi access point, or the like) may be further included. The terminal 230 obtains the XR data from the transport network 220 via the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are in-vehicle terminals, and the XR data may be exchanged between the in-vehicle terminals. It may be understood that, the another terminal 310 may be further connected to a transport network (for example, an LTE network, a 5G network, or a 6G network), to obtain the XR data from the transport network, or send the data to the transport network.

FIG. 4 is a diagram of another scenario to which an embodiment of this application is applicable. FIG. 4 shows a system 400, including a terminal 430, a Wi-Fi router or Wi-Fi access point 420 (which may be briefly referred to as a Wi-Fi apparatus 420), and another terminal 410. The another terminal 410 is a terminal other than the terminal 430. The another terminal 410 may transmit XR data to the terminal 430 via the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device via the Wi-Fi router, the Wi-Fi access point, or the set-top box, and present the XR data to a user.

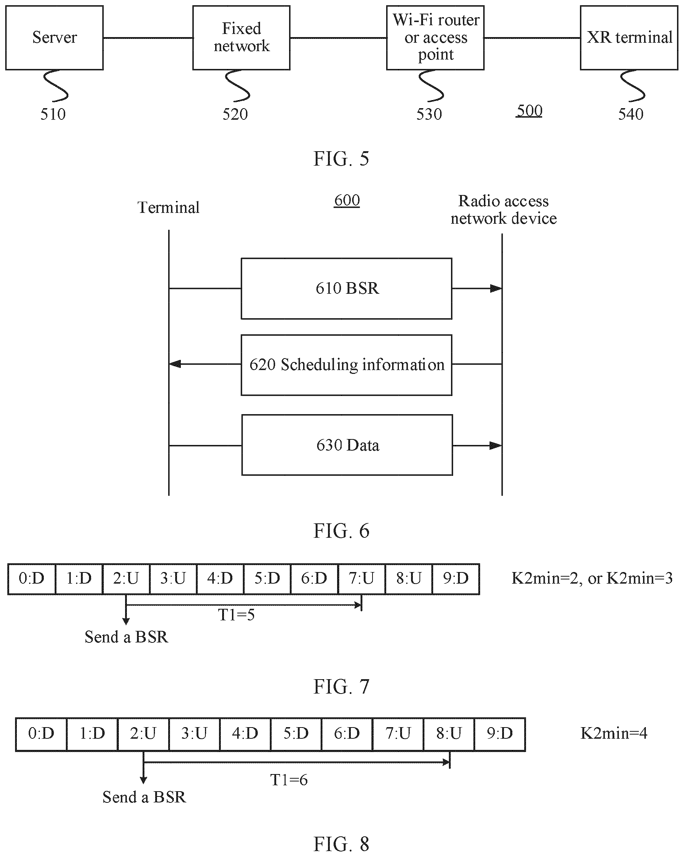

FIG. 5 is a diagram of another scenario to which an embodiment of this application is applicable. FIG. 5 shows a system 500, including a server 510, a fixed network 520, a Wi-Fi router or Wi-Fi access point 530 (which may be briefly referred to as a Wi-Fi apparatus 530), and a terminal 540. The server 510 may be configured to: encode, decode, and render XR source data, and transmit the XR data to the terminal 540 via the fixed network 520 and the Wi-Fi apparatus 530. For example, the fixed network 520 is an operator network, the Wi-Fi apparatus 530 is the Wi-Fi router, the Wi-Fi access point, or the set-top box, and the server 510 transmits or projects the XR data to the terminal 540 via the operator network 520 and the Wi-Fi apparatus 530.

It may be understood that, FIG. 2 to FIG. 5 are merely examples of several scenarios to which embodiments of this application are applicable, and do not limit a scenario to which embodiments of this application are applicable.

The following describes technical solutions of this application with reference to accompanying drawings.

Before sending uplink data, a terminal generally sends a buffer status report (buffer status report, BSR) to a radio access network device, to report a current data volume in a buffer of the terminal to the radio access network device. The radio access network device may allocate transmission resources for uplink data to the terminal based on a current data volume reported by the terminal, and the terminal may send the uplink data to the radio access network device on the allocated resources.

The XR data has a high requirement on a transmission delay. If the XR data (for example, data of a picture frame) is not transmitted within a specific delay budget, terminal user experience deteriorates sharply. The arrival of the XR data may not accurately match the allocation of the transmission resources. For example, after the terminal reports the BSR and before the radio access network device delivers, to the terminal, grant information for allocating the transmission resources of the uplink data, the XR data arrives at the terminal. In this case, the transmission resources allocated to the terminal cannot match the XR data that arrives additionally. Consequently, transmission cannot be completed in a timely manner, and a transmission delay of the XR data is increased. Therefore, how to efficiently utilize limited wireless resources to reduce the transmission delay of the XR data is a problem to be urgently resolved.

This application provides a data transmission method, so that a terminal can estimate and report an estimated data volume in a specific period of time, so that a radio access network device can schedule uplink data of the terminal in a more timely manner. In this way, a data transmission delay is reduced, and terminal user experience is improved. It may be understood that, the method provided in this application does not limit a data service type to which the method is applied, and is also applicable to a data service type other than XR data and/or video service data.

FIG. 6 is a diagram of interaction in a data transmission method 600 according to an embodiment of this application. In FIG. 6, the method is illustrated by using an example in which a radio access network device and a terminal perform interaction. However, an execution body of the interaction is not limited in this application. For example, the radio access network device in FIG. 6 may alternatively be a chip, a chip system, or a processor that supports the radio access network device in implementing the method, or may be a logical module or software that can implement all or some functions of the radio access network device. The terminal in FIG. 6 may alternatively be a chip, a chip system, or a processor that supports the terminal in implementing the method, or may be a logical module or software that can implement all or some functions of the terminal. As shown in FIG. 6, the method 600 in this embodiment may include a part 610, a part 620, and a part 630.

Part 610: A terminal sends a BSR to a radio access network device, and correspondingly, the radio access network device receives the BSR. The BSR indicates a data volume (N1+N2), where N1 indicates a current data volume in a buffer of the terminal, N2 indicates an estimated data volume of the terminal within a time interval T1, N1≥0, N2≥0, and T1>0. It may be understood that, the current data volume N1 may be a data volume corresponding to a complete data packet, or may be a corresponding remaining data volume after a part of a complete data packet is transmitted. This is not limited in this application.

Part 620: The radio access network device sends scheduling information to the terminal, where the scheduling information schedules data transmission, and the scheduled data includes one or more of the following data: data corresponding to the current data volume and data corresponding to the estimated data volume. The scheduling information includes resource allocation information, to indicate, to the terminal, resources for carrying data. Correspondingly, the terminal receives the scheduling information from the radio access network device.

Part 630: The terminal sends data to the radio access network device based on the scheduling information, where the data includes one or more of the following: data corresponding to the current data volume and data corresponding to the estimated data volume. Correspondingly, the radio access network device receives the data from the terminal.

According to the method, the terminal may estimate and report an estimated data volume in a future period of time to the network device, so that the network device can schedule uplink data sending in a more timely manner based on the estimated data volume. In this way, a data transmission delay is reduced, and terminal user experience is improved.

In a possible implementation of the method 600, the time interval T1 for performing data volume estimation is predefined, or is configured by the radio access network device.

When T1 is configured by the radio access network device for the terminal, there may be a plurality of different configuration methods.

In a T1 configuration method, the radio access network device may indicate the time interval T1 to the terminal by using physical layer signaling, or may configure the time interval T1 for the terminal by using higher layer signaling.

It may be understood that, the physical layer signaling in this application may be, for example, downlink control information (downlink control information, DCI) carried on a physical downlink control channel (physical downlink control channel, PDCCH). The higher layer signaling in this application may be, for example, a media access control (media access control, MAC) control element (control element, CE), or may be radio resource control (radio resource control, RRC) signaling.

In another T1 configuration method, the radio access network device may configure the time interval T1 for the terminal by using physical layer signaling and higher layer signaling. For example, one or more candidates T1 may be configured by using higher layer signaling (for example, a MAC CE or RRC signaling), and then one of the candidates T1 is indicated as the time interval T1 by using physical layer signaling (for example, DCI). For example, one or more candidates T1 may be configured by using RRC signaling (a type of higher layer signaling), and then one of the candidates T1 is configured as the time interval T1 by using a MAC CE (another type of higher layer signaling). For example, one or more candidates T1 may be configured by using a MAC CE (a type of higher layer signaling), and then one of the candidates T1 is configured as the time interval T1 by using RRC signaling (another type of higher layer signaling).

When the radio access network device configures T1 for the terminal, the radio access network device may configure the required time interval T1 based on a load status. For example, in a light-load state, a longer time interval T1 may be configured, to schedule uplink data of the terminal in a more timely manner; or in a heavy-load state, a shorter time interval T1 may be configured, to avoid a waste of resources and schedule uplink data of the terminal as soon as possible. Alternatively, the radio access network device may configure the required time interval T1 based on a requirement on a quality of service (quality of service, QoS) of a current service flow. For example, if a packet delay budget (packet delay budget, PDB) required by the QoS of the current service flow is small, a longer time interval T1 may be configured and the uplink data of the terminal may be scheduled in a timely manner; or if a PDB required by the QoS of the current service flow is large, a shorter time interval T1 may be configured to avoid a waste of wireless transmission resources.

T1 may alternatively meet a predefined rule. In a possible implementation, T1 is a time interval between a time unit in which the BSR is sent and a next uplink time unit that meets a condition in the part 610. A downlink time unit is included between the next uplink time unit that meets the condition and the time unit in which the BSR is sent, and a time interval between the downlink time unit and the next uplink time unit that meets the condition is greater than or equal to a minimum time interval for scheduling uplink data sending.

The time unit in this application may be one or more radio frames, one or more subframes, one or more slots, or one or more time domain symbols. The uplink time unit is a time unit used to carry an uplink signal or uplink information, and the downlink time unit is a time unit used to carry a downlink signal or downlink information.

In the predefined rule of T1, the downlink time unit included between the next uplink time unit that meets the condition and the time unit in which the BSR is sent may be understood as a time unit that can be used to send scheduling information, and the next uplink time unit that meets the condition may be understood as a next time unit that meets the condition and that is used to send uplink data. The minimum time interval for scheduling uplink data sending (which may be represented as K2min) may be understood as a minimum time interval that needs to exist between receiving the scheduling information by the terminal and sending the uplink data scheduled by using the scheduling information. After receiving the information for scheduling uplink data sending, the terminal needs a specific preparation period of time to perform an operation such as packet assembly before sending the uplink data. Therefore, the uplink data can be sent only after at least the minimum time interval.

FIG. 7 is used as an example to show distribution of uplink and downlink time units, where D represents a downlink time unit, U represents an uplink time unit, and a number before D/U represents a number of a time unit. For example, "0:D" indicates a downlink time unit 0, and "2:U" indicates an uplink time unit 2. In FIG. 7, an example in which a BSR is sent in an uplink time unit 2 and K2min=2 (two time units) or 3 (three time units) is used. In a predefined rule of T1, T1 is a time interval between a time unit in which a BSR is sent and a next uplink time unit that meets a condition, a downlink time unit is included between the next uplink time unit that meets the condition and the time unit in which the BSR is sent, and a time interval between the downlink time unit and the next uplink time unit that meets the condition is greater than or equal to K2min.

In FIG. 7, K2min=2 is used as an example. If the time unit in which the BSR is sent is the uplink time unit 2, a next uplink time unit is an uplink time unit 3. However, there is no downlink time unit between the uplink time unit 2 and the uplink time unit 3. Therefore, the uplink time unit 3 is not the next uplink time unit that meets the condition. Another next uplink time unit is an uplink time unit 7, and downlink time units 4 to 6 are included between the uplink time unit 2 and the uplink time unit 7. A time interval between a downlink time unit 4 and the uplink time unit 7 is three time units (that is, greater than K2min), and a time interval between a downlink time unit 5 and the uplink time unit 7 is two time units (that is, equal to K2min). Therefore, the uplink time unit 7 is the next uplink time unit that meets the condition. Therefore, T1 is a time interval between the uplink time unit 2 and the uplink time unit 7, that is, T1=5 (five time units).

In FIG. 7, K2min=3 is used as an example. If the time unit in which the BSR is sent is the uplink time unit 2, a next uplink time unit is an uplink time unit 3. However, there is no downlink time unit between the uplink time unit 2 and the uplink time unit 3. Therefore, the uplink time unit 3 is not the next uplink time unit that meets the condition. Another next uplink time unit is an uplink time unit 7, and downlink time units 4 to 6 are included between the uplink time unit 2 and the uplink time unit 7. A time interval between a downlink time unit 4 and the uplink time unit 7 is three time units (that is, equal to K2min). Therefore, the uplink time unit 7 is the next uplink time unit that meets the condition. Therefore, T1 is a time interval between the uplink time unit 2 and the uplink time unit 7, that is, T1=5 (five time units).

FIG. 8 is used as an example. Different from that in FIG. 7, K2min in FIG. 8 meets K2min=4 (four time units). If the time unit in which the BSR is sent is the uplink time unit 2, a next uplink time unit is an uplink time unit 3. However, there is no downlink time unit between the uplink time unit 2 and the uplink time unit 3. Therefore, the uplink time unit 3 is not the next uplink time unit that meets the condition. Another next uplink time unit is an uplink time unit 7, and downlink time units 4 to 6 are included between the uplink time unit 2 and the uplink time unit 7. However, time intervals between the downlink time units 4 to 6 and the uplink time unit 7 are respectively 3 time units, 2 time units, and one time unit, and are all less than K2min. Therefore, the uplink time unit 7 is not the next uplink time unit that meets the condition. Another next uplink time unit is an uplink time unit 8, and downlink time units 4 to 6 are included between the uplink time unit 2 and the uplink time unit 8. A time interval between a downlink time unit 4 and the uplink time unit 8 is four time units (that is, equal to K2min). Therefore, the uplink time unit 8 is the next uplink time unit that meets the condition. Therefore, T1 is a time interval between the uplink time unit 2 and the uplink time unit 8, that is, T1=6 (six time units).

It may be understood that, when T1 is configured by the radio access network device, the configured T1 may also meet the foregoing predefined rule.

According to the predefined rule of T1, the uplink data of the terminal can be scheduled in a more timely manner without wasting time-frequency resources. In this way, a data transmission delay is reduced, and terminal user experience is improved.

It may be understood that, in the foregoing example, T1 is described by using a time unit as a measurement granularity. However, the measurement granularity of T1 is not limited in this application. For example, T1 may alternatively be described by using a time unit (for example, a microsecond, a millisecond, or a second) as the measurement granularity.

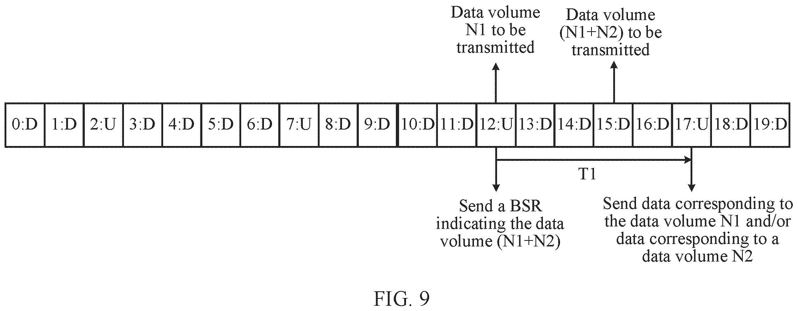

With reference to FIG. 9, the following describes an example of an implementation process of the method 600.

FIG. 9 shows distribution of uplink and downlink time units. In an example in which T1=5 (five time units), a terminal sends, to a radio access network device in an uplink time unit 12, a BSR indicating a data volume (N1+N2). It may be learned that, an actual data volume to be transmitted by the terminal in the uplink time unit 12 is N1, or it may be understood that, N1 represents a current data volume in the buffer of the terminal in the uplink time unit 12. The terminal estimates the estimated data volume N2 of the terminal in a time interval T1 between a time unit (an uplink time unit 12) in which the BSR is sent and a next uplink time unit (an uplink time unit 17) that meets a condition, and reports a total data volume of the estimated data volume N2 and the current data volume N1 to the radio access network device in the uplink time unit 12. In this way, the radio access network device may allocate, to the terminal in the uplink time unit 17 in advance based on the reported data volume (N1+N2), resources for transmitting data corresponding to the data volume N1 and/or data corresponding to the data volume N2. In this way, when new data with a data volume of N2 appears in the terminal in the period of time T1 (for example, in a downlink time unit 15), the terminal does not need to send, to the radio access network device, a BSR indicating the data volume N2, but can directly send, in the uplink time unit 17 by using the resources allocated by the radio access network device, the data corresponding to the data volume N1 and/or the data corresponding to the data volume N2. In this way, a data transmission delay is reduced, and terminal user experience is improved.

In a possible implementation of the method 600, the method further includes: determining, by the terminal, the estimated data volume based on a data periodicity, a packet size of the data, and a previous arrival time of the data; or determining, by the terminal, the estimated data volume based on a data periodicity and a previous arrival time of the data. It indicates that the terminal may estimate the estimated data volume N2 based on a related parameter of service data. For example, XR or video service data usually has a specific periodicity, and may be understood as the data periodicity herein. It may be understood that, the related parameters of the service data include but are not limited to the foregoing several types.

For example, in FIG. 9, an example in which a previous arrival time of data is a downlink time unit 0, a data periodicity is 15 time units, a packet size of the data is 500 bytes, and T1 is five time units is used. Before sending, in an uplink time unit 12, a BSR indicating data volume (N1+N2), the terminal may estimate an estimated data volume N2 in a time interval T1 (five time units) based on the data periodicity (15 time units), the packet size (500 bytes) of the data, and the previous arrival time (a downlink time unit 0) of the data. For example, because the previous arrival time of the data is the downlink time unit 0, and the data periodicity is 15 time units, the terminal may estimate that a new data packet appears in an uplink time unit 15 in the time interval T1 from the uplink time unit 12 to an uplink time unit 17. Further, because the packet size of the data is 500 bytes, the terminal may estimate that the estimated data volume N2 in the time interval T1 is 500 bytes.

It may be understood that, the foregoing describes estimation of the estimated data volume N2 by using an example in which the packet size of the data is a fixed value. However, this is not limited in this application. Alternatively, the packet size of the data may be a random number that meets a probability distribution (for example, meets a truncated Gaussian distribution). In this case, the estimated data volume N2 may be estimated based on a related statistical amount (for example, one or more of an average value, a variance, a minimum value, or a maximum value) of the probability distribution.

It may be understood that, the estimated data volume N2 may be greater than 0 (that is, there may be new data in the time interval T1), or may be equal to 0 (that is, there may be no new data in the time interval T1). For example, in FIG. 9, an example in which a previous arrival time of data is a downlink time unit 10, a data periodicity is 15 time units, and T1 is five time units is used. Before sending, in an uplink time unit 12, a BSR indicating data volume (N1+N2), the terminal may estimate an estimated data volume N2 in a time interval T1 (five time units) based on the data periodicity (15 time units), and the previous arrival time (a downlink time unit 10) of the data. For example, because the previous arrival time of the data is the downlink time unit 10, and the data periodicity is 15 time units, the terminal may estimate that no new data packet appears in an uplink time unit 15 in the time interval T1 from the uplink time unit 12 to the uplink time unit 17. Therefore, N2=0 is obtained.

In this manner, the estimated data volume N2 is estimated, so that the data volume N2 in the time interval T1 can be more accurately estimated, and the uplink data of the terminal can be scheduled in a timely manner, to reduce a data transmission delay, and reduce a waste of transmission resources and an extra transmission delay caused by inaccurate estimation.

The terminal may obtain the related parameter of the service data in a plurality of different manners.

For example, the terminal may obtain the related parameter of the service data by using configuration information of the QoS flow corresponding to the data, for example, a QoS rule (QoS rule). For another example, the terminal may obtain the related parameter of the service data by detecting a data packet in a QoS flow. For another example, the terminal may notify service feature information of application layer data to a protocol layer (for example, an RRC layer or a MAC layer) below the application layer of the terminal through interaction between protocol layers, so that the protocol layer below the application layer of the terminal can obtain the related parameter of the service data.

In the part 610, the BSR sent by the terminal may be implemented in a plurality of different manners.

In a possible implementation of the BSR, the BSR is carried by a first MAC protocol data unit (protocol data unit, PDU), the first MAC PDU further includes a logical channel identifier, and the logical channel identifier is used to identify the BSR. The BSR may be understood as a newly defined BSR format, for example, may be defined as a latency-critical BSR format. However, it may be understood that, a specific name of the BSR format is not limited in this application. A definition of a buffer size (buffer size) in the BSR format may be a total data volume expected to arrive before a specified next transmission opportunity or time. A priority of the BSR may be the same as that of another type of BSR (for example, a regular BSR and a periodic BSR), and is higher than a priority of a MAC service data unit (service data unit, SDU) for data transmission.

In this implementation, impact on an existing MAC CE can be reduced, to simplify implementation.

For example, the logical channel identifier used to identify the BSR may be a logical channel identifier (logical channel ID, LCID) included in a MAC subheader, and the MAC subheader is included in the first MAC PDU. For example, as shown in Table 1, a reserved codepoint (codepoint)/index (index) corresponding to the LCID may be used to identify the BSR. In Table 1, an originally reserved codepoint/index 44 is used to represent the newly defined BSR format. When obtaining, by parsing the first MAC PDU, the codepoint/index 44 corresponding to the LCID, the radio access network device may learn that the newly defined BSR format is received.

**Table 1**

| **Codepoint/Index** | **LCID values** |
|---|---|
| 0 | CCCH of size 64 bits (referred to as "CCCH1" in TS 38.331 [5]) |
| 1-32 | Identity of the logical channel |
| 33 | Extended logical channel ID field (two-octet eLCID field) |
| 34 | Extended logical channel ID field (one-octet eLCID field) |
| **35-43** | **Reserved** |
| **44** | **Latencv-critical BSR** |
| 45 | Truncated Sidelink BSR |
| 46 | Sidelink BSR |
| 47 | Reserved |
| 48 | LBT failure (four octets) |
| 49 | LBT failure (one octet) |
| 50 | BFR (one octet Cᵢ) |
| 51 | Truncated BFR (one octet Cᵢ) |
| 52 | CCCH of size 48 bits (referred to as "CCCH" in TS 38.331 [5]) |
| 53 | Recommended bit rate query |
| 54 | Multiple Entry PHR (four octets Cᵢ) |
| 55 | Configured Grant Confirmation |
| 56 | Multiple Entry PHR (one octet Cᵢ) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

For example, the logical channel identifier used to identify the BSR may alternatively be an extended logical channel identifier (extended LCID, eLCID) included in a MAC subheader, and the MAC subheader is included in the first MAC PDU. For example, as shown in Table 2, a reserved codepoint (codepoint)/index (index) corresponding to the eLCID may be used to identify the BSR. In Table 2, an originally reserved codepoint 249/index 313 is used to represent the newly defined BSR format. When obtaining, by parsing the first MAC PDU, the codepoint 249/index 313 corresponding to the eLCID, the radio access network device may learn that the newly defined BSR format is received.

**Table 2**

| **Codepoint** | **Index** | **LCID values** |
|---|---|---|
| **0 to 248** | **64 to 312** | **Reserved** |
| **249** | **313** | **Latencv-critical BSR** |
| 250 | 314 | BFR (four octets Cᵢ) |
| 251 | 315 | Truncated BFR (four octets Cᵢ) |
| 252 | 316 | Multiple Entry Configured Grant Confirmation |
| 253 | 317 | Sidelink Configured Grant Confirmation |
| 254 | 318 | Desired Guard Symbols |
| 255 | 319 | Pre-emptive BSR |

In another possible implementation of the BSR, the BSR is carried by a second MAC PDU, the second MAC PDU further includes a reserved field, and the reserved field is used to identify the BSR. The BSR may be understood as an original BSR format. The reserved field used to identify the BSR may be an R field included in a MAC subheader, and the MAC subheader is included in the second MAC PDU. When R=1, it indicates that the data volume (N1+N2) is reported in the BSR; or when R=0, it indicates that the data volume N1 is reported in the BSR. Alternatively, when R=0, it indicates that the data volume (N1+N2) is reported in the BSR; or when R=1, it indicates that the data volume N1 is reported in the BSR. When parsing a value of R in the second MAC PDU, the radio access network device may learn whether the data volume N1 or the data volume (N1+N2) is reported in the BSR.

In this implementation, no new BSR format or extra indication overheads need to be introduced.

In the part 610, there may be a plurality of different implementations for triggering the terminal to send the BSR.

In a possible implementation of sending the BSR, the terminal may periodically send the BSR to the radio access network device. The periodically sent BSR may not be affected by sending of a regular BSR. For example, the radio access network device may configure a periodicity for sending the BSR for the terminal, and the terminal sends the BSR to the radio access network device based on the periodicity. The periodicity of sending the BSR may be related to distribution of uplink and downlink time units and a subcarrier spacing. For example, when distribution of the uplink and downlink time units is DDUDDDDUDD (where D represents a downlink time unit, and U represents an uplink time unit), and a subcarrier spacing is 30 kHz, a time interval between two uplink time units is five time units. For example, when a subcarrier spacing is 30 kHz and a length of a time unit is 0.5 millisecond, a periodicity of sending the BSR may be 5*0.5=2.5 milliseconds. The periodicity of sending the BSR may alternatively be related to a periodicity of the service data. This is not limited in this application. In this implementation, a to-be-transmitted uplink data volume can be reported in a timely manner, and the uplink data can be scheduled in a timely manner. In this way, a data transmission delay is reduced.

In another possible implementation of sending the BSR, when there is remaining data in the buffer of the terminal that has not been transmitted, or when a data packet is expected to arrive within the time interval T1, the terminal sends the BSR to the radio access network device. For example, when the buffer of the terminal has corresponding remaining data after a part of a complete data packet is transmitted, the terminal sends the BSR to the radio access network device. For another example, when data corresponding to a newly arrived complete data packet exists in the buffer of the terminal, the terminal sends the BSR to the radio access network device. In this implementation, a to-be-transmitted uplink data volume can be reported in a timely manner, and the uplink data can be scheduled in a timely manner. In this way, a data transmission delay is reduced.

It may be understood that, before the part 610, the terminal may further send a scheduling request (scheduling request, SR) to the radio access network device. Correspondingly, the radio access network device receives the SR, allocates, to the terminal based on the SR, a resource carrying the BSR, and sends, to the terminal, information indicating the resource. After receiving the information indicating the resource, the terminal may send the BSR in the part 610 on the indicated resource.

In a possible implementation of the part 620, the radio access network device may send the scheduling information to the terminal based on the BSR received in the part 610. For example, if a radio access network device learns, by receiving the BSR, that the terminal has to-be-sent data of the data volume (N1+N2), the radio access network device may allocate, to the terminal, a resource that can carry the data volume (N1+N2), and send resource allocation information of the resource to the terminal by adding the resource allocation information to the scheduling information. After receiving the resource allocation information, the terminal may send the data corresponding to the data volume (N1+N2) by using the resource in the part 630.

In the foregoing manner, the network device may allocate, to the terminal in advance based on the BSR reported by the terminal, plenty of resources for carrying remaining data of the terminal and estimated data in a future period of time, so that the terminal can be prevented from occupying limited wireless resources to send the BSR again. In this way, a data transmission delay is reduced, and terminal user experience is improved.

Corresponding to the method provided in the foregoing method embodiment, an embodiment of this application further provides a corresponding apparatus, including a corresponding module configured to perform the foregoing embodiment. The module may be software, hardware, or a combination of software and hardware.

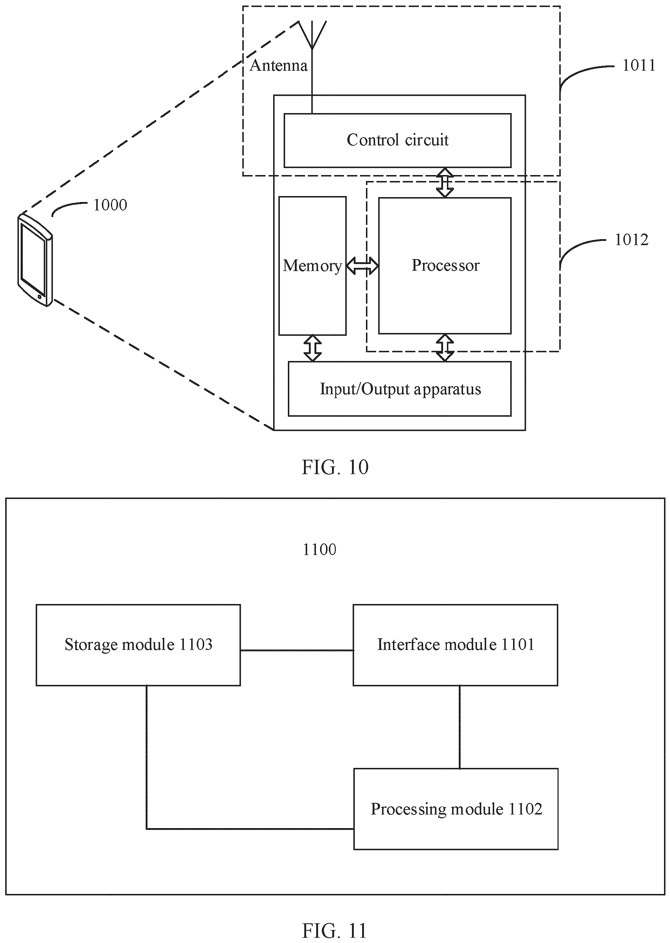

FIG. 10 provides a diagram of a structure of a terminal. The terminal may be applicable to a scenario shown in FIG. 1, FIG. 2, FIG. 3, FIG. 4, or FIG. 5. The terminal or a component in the terminal may perform the foregoing method 600 and various possible implementations. For ease of descriptions, FIG. 10 shows only main components of the terminal. As shown in FIG. 10, the terminal 1000 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, a keyboard, or the like, is mainly configured to: receive data input by a user and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives a radio frequency signal by using the antenna, further converts the radio frequency signal into a baseband signal, and outputs the baseband signal to the processor. The processor converts the baseband signal into data, and processes the data.

For ease of descriptions, FIG. 10 shows only one memory and one processor. An actual terminal may include a plurality of processors and a plurality of memories. The memory may alternatively be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to: control an entire terminal device, execute a software program, and process data of the software program. The processor in FIG. 10 integrates functions of the baseband processor and the central processing unit. A person skilled in the art may understand that, the baseband processor and the central processing unit may alternatively be processors independent of each other, and are interconnected by using a technology such as a bus. A person skilled in the art may understand that, the terminal may include a plurality of baseband processors to adapt to different network standards, the terminal may include a plurality of central processing units to enhance a processing capability of the terminal, and all components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of the software program, and the processor executes the software program to implement a baseband processing function.

In an example, the antenna and the control circuit that have receiving and sending functions may be considered as a transceiver unit 1011 of the terminal 1000, and the processor that has a processing function may be considered as a processing unit 1012 of the terminal 1000. As shown in FIG. 10, the terminal device 1000 includes the transceiver unit 1011 and the processing unit 1012. The transceiver unit may alternatively be referred to as a transceiver, a transceiver machine, a transceiver apparatus, or the like. Optionally, a component that is in the transceiver unit 1011 and that is configured to implement a receiving function may be considered as a receiving unit, and a component that is in the transceiver unit 1011 and that is configured to implement a sending function may be considered as a sending unit. That is, the transceiver unit 1011 includes the receiving unit and the sending unit. For example, the receiving unit may alternatively be referred to as a receiver, a receiver machine, or a receiver circuit, and the sending unit may alternatively be referred to as a transmitter, a transmitter machine, or a transmitter circuit. Optionally, the receiving unit and the sending unit may be one integrated unit, or may be a plurality of independent units. The receiving unit and the sending unit may be in one geographical position, or may be distributed in a plurality of geographical positions.

As shown in FIG. 11, another embodiment of this application provides an apparatus 1100. The apparatus may be a terminal, or may be a component (for example, an integrated circuit, a chip, or the like) of a terminal. Alternatively, the apparatus may be a radio access network device, a component (for example, an integrated circuit, a chip, or the like) of a network device, or a logical module or software that can implement all or some functions of a radio access network device. The apparatus may alternatively be another communication module. For example, the apparatus 1100 may implement the function of the radio access network device in the method 600, or the apparatus 1100 may implement the function of the terminal in the method 600. The apparatus 1100 may include: an interface module 1101 (or referred to as an interface unit) and a processing module 1102 (or referred to as a processing unit), and may further include a storage module 1103 (or referred to as a storage unit).

In a possible design, one or more modules in FIG. 11 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used by the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiment. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiment.

In a possible design, the apparatus 1100 includes the processing module 1102 and the interface module 1101. For example, the apparatus 1100 may be a terminal, may be a component (for example, a processor, a chip, a chip system, or the like) of a terminal, or may be a logical module or software that can implement all or some functions of a terminal. The interface module 1101 is configured to send a BSR to a network device, where the BSR indicates a data volume (N1+N2), N1 indicates a current data volume in a buffer of the terminal, N2 indicates an estimated data volume of the terminal within a time interval T1, N1≥0, N2≥0, and T1>0. The interface module 1101 is further configured to receive scheduling information from the network device. The processing module 1102 is configured to control the apparatus 1100 to send data to the network device based on the scheduling information, where the data includes data corresponding to the current data volume and/or data corresponding to the estimated data volume.

In some possible implementations of the apparatus 1100, T1 is predefined, or T1 is configured by the network device.

When T1 is configured by the network device for the terminal, there may be a plurality of different configuration methods. For example, T1 is indicated by using physical layer signaling, or T1 is configured by using higher layer signaling. For another example, T1 is configured by using physical layer signaling and higher layer signaling.

When the network device configures T1 for the terminal, the network device may configure the required time interval T1 based on a load status. For example, in a light-load state, a longer time interval T1 may be configured; or in a heavy-load state, a shorter time interval T1 may be configured. Alternatively, the network device may configure the required time interval T1 based on a requirement on a QoS of a current service flow. For example, if a PDB required by the QoS of the current service flow is small, a longer time interval T1 may be configured; or if a PDB required by the QoS of the current service flow is large, a shorter time interval T1 may be configured.

In some possible implementations of the apparatus 1100, T1 is a time interval between a time unit in which the BSR is sent and a next uplink time unit that meets a condition. Optionally, a downlink time unit is included between the next uplink time unit that meets the condition and the time unit in which the BSR is sent, and a time interval between the downlink time unit and the uplink time unit that meets the condition is greater than or equal to a minimum time interval for scheduling uplink data sending.

In some possible implementations of the apparatus 1100, the processing module 1102 is further configured to: determine the estimated data volume based on a data periodicity, a packet size of the data, and a previous arrival time of the data; or determine the estimated data volume based on a data periodicity and a previous arrival time of the data.

In some possible implementations of the apparatus 1100, the BSR is carried by a first MAC protocol data unit (protocol data unit, PDU), the first MAC PDU further includes a logical channel identifier, and the logical channel identifier is used to identify the BSR.

In some possible implementations of the apparatus 1100, the BSR is carried by a second MAC PDU, the second MAC PDU further includes a reserved field, and the reserved field is used to identify the BSR.

In some possible implementations of the apparatus 1100, that the interface module 1101 is configured to send a BSR to a network device includes: the interface module 1101 is configured to periodically send the BSR to the network device.

In some possible implementations of the apparatus 1100, that the interface module 1101 is configured to send a BSR to a network device includes: when there is remaining data in the buffer of the terminal that has not been transmitted, or when a data packet is expected to arrive within the time interval T1, the interface module 1101 is configured to send the BSR to the network device.

In another possible design, the apparatus 1100 includes the interface module 1101. The interface module 1101 is configured to receive a BSR from a terminal, where the BSR indicates a data volume (N1+N2), N1 indicates a current data volume in a buffer of the terminal, N2 indicates an estimated data volume of the terminal within a time interval T1, N1≥0, N2≥0, and T1>0. The interface module 1101 is further configured to send scheduling information to the terminal, where the scheduling information schedules data transmission, and the data includes data corresponding to the current data volume and/or data corresponding to the estimated data volume.

In some possible implementations of the apparatus 1100, T1 is predefined, or T1 is configured by the network device.

In some possible implementations of the apparatus 1100, T1 is a time interval between a time unit in which the BSR is received and a next uplink time unit that meets a condition. Optionally, a downlink time unit is included between the next uplink time unit that meets the condition and the time unit in which the BSR is received, and a time interval between the downlink time unit and the uplink time unit is greater than or equal to a minimum time interval for scheduling uplink data sending.

In some possible implementations of the apparatus 1100, the BSR is carried by a first MAC PDU, the first MAC PDU further includes a logical channel identifier, and the logical channel identifier is used to identify the BSR.

In some possible implementations of the apparatus 1100, the BSR is carried by a second MAC PDU, the second MAC PDU further includes a reserved field, and the reserved field is used to identify the BSR.

In some possible implementations of the apparatus 1100, that the interface module 1101 is configured to receive a BSR from a terminal includes: the interface module 1101 is configured to periodically receive the BSR from the terminal.

In some possible implementations of the apparatus 1100, the apparatus 1100 further includes the processing module 1102. The processing module 1102 is configured to control the apparatus 1100 to send the scheduling information to the terminal based on the BSR.

It may be understood that, for beneficial effects corresponding to the apparatus 1100 and various possible implementations, refer to the descriptions in the foregoing method embodiment or SUMMARY Details are not described herein again.

Optionally, the apparatus 1100 may further include a storage module 1103, configured to store data or instructions (which may alternatively be referred to as code or a program). The other modules may interact with or be coupled to the storage module, to implement corresponding methods or functions. For example, the processing module 1102 may read the data or the instructions in the storage module 1103, so that the apparatus 1100 implements the method in the foregoing embodiment.

In an example, the module in the foregoing apparatus may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented in a form of scheduling a program by the processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

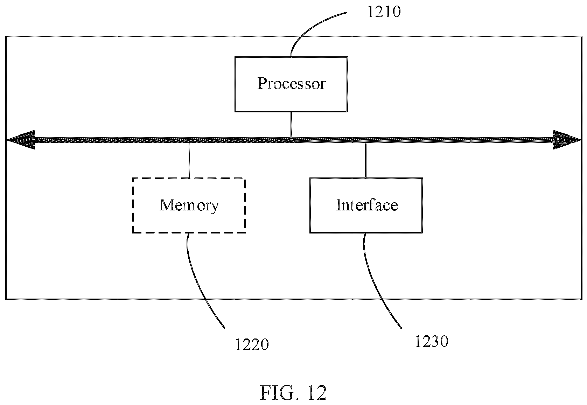

FIG. 12 is a diagram of an apparatus according to an embodiment of this application. The apparatus may be configured to implement the method 600 and various possible implementations. As shown in FIG. 12, the apparatus includes a processor 1210 and an interface 1230, and the processor 1210 is coupled to the interface 1230. The interface 1230 is configured to communicate with another module or device. The interface 1230 may be a transceiver or an input/output interface. The interface 1230 may be, for example, an interface circuit. Optionally, the apparatus further includes a memory 1220, configured to store instructions executed by the processor 1210, store input data required by the processor 1210 to run the instructions, or store data generated after the processor 1210 runs the instructions.

The method 600 and various possible implementations may be implemented by the processor 1210 by invoking the program or the instructions stored in the memory 1220. The memory 1220 may be inside the apparatus, or may be outside the apparatus. This is not limited in this application.

Optionally, a function/implementation process of the interface module 1101 and the processing module 1102 in FIG. 11 may be implemented by the processor 1210 in the apparatus shown in FIG. 12. Alternatively, a function/implementation process of the processing module 1102 in FIG. 11 may be implemented by the processor 1210 in the apparatus shown in FIG. 12, and a function/implementation process of the interface module 1101 in FIG. 11 may be implemented by the interface 1230 in the apparatus shown in FIG. 12. For example, the function/implementation process of the interface module 1101 may be implemented by the processor by invoking the program instructions in the memory to drive the interface 1230.

When the apparatus is a chip used in a terminal, the chip in the terminal implements the function of the terminal in the foregoing method embodiment. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements the function of the radio access network device in the foregoing method embodiment. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that, various numbers such as first and second in this application are merely used for differentiation for ease of descriptions, and are not used to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one (piece or type) of a, b, or c may indicate: a, b, c, a and b, a and c, b and c, or a, b, and c, where a, b, and c may be singular or plural. "A plurality of" means two or more, and another quantifier is similar to this.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state drive, SSD)), or the like.

The steps of the method described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk drive, a removable disk drive, or a storage medium in any other form in the art. For example, the storage medium may connect to a processor so that the processor may read information from the storage medium and write information to the storage medium. Optionally, the storage medium may alternatively be integrated into a processor. The processor and the storage medium may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

For same or similar parts in embodiments of this application, refer to each other. In embodiments of this application and the implementations/methods/implementation methods in embodiments, unless otherwise specified or if there is a logical conflict, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data transmission method, wherein the method is applied to a terminal, and the method comprises:
sending a buffer status report BSR to a network device, wherein the BSR indicates a data volume (N1+N2), N1 indicates a current data volume in a buffer of the terminal, N2 indicates an estimated data volume of the terminal within a time interval T1, N1≥0, N2≥0, and T1>0;
receiving scheduling information from the network device; and
sending data to the network device based on the scheduling information, wherein the data comprises data corresponding to the current data volume and/or data corresponding to the estimated data volume.

2. The method according to claim 1, wherein T1 is a time interval between a time unit in which the BSR is sent and a next uplink time unit that meets a condition.

3. The method according to claim 2, wherein a downlink time unit is comprised between the next uplink time unit that meets the condition and the time unit in which the BSR is sent, and a time interval between the downlink time unit and the uplink time unit is greater than or equal to a minimum time interval for scheduling uplink data sending.

4. The method according to any one of claims 1 to 3, wherein the method further comprises:
determining the estimated data volume based on a data periodicity, a packet size of the data, and a previous arrival time of the data; or
determining the estimated data volume based on a data periodicity and a previous arrival time of the data.

5. The method according to any one of claims 1 to 4, wherein the BSR is carried by a first media access control MAC protocol data unit PDU, the first MAC PDU further comprises a logical channel identifier, and the logical channel identifier is used to identify the BSR.

6. The method according to any one of claims 1 to 4, wherein the BSR is carried by a second MAC PDU, the second MAC PDU further comprises a reserved field, and the reserved field is used to identify the BSR.

7. The method according to any one of claims 1 to 6, wherein the sending a BSR to a network device comprises:
periodically sending the BSR to the network device.

8. The method according to any one of claims 1 to 6, wherein the sending a BSR to a network device comprises:
sending the BSR to the network device when there is remaining data in the buffer of the terminal that has not been transmitted, or when a data packet is expected to arrive within the time interval T1.

9. The method according to any one of claims 1 to 8, wherein T1 is predefined, or T1 is configured by the network device.

10. A data transmission method, wherein the method is applied to a network device, and the method comprises:
receiving a buffer status report BSR from a terminal, wherein the BSR indicates a data volume (N1+N2), N1 indicates a current data volume in a buffer of the terminal, N2 indicates an estimated data volume of the terminal within a time interval T1, N1≥0, N2≥0, and T1>0; and
sending scheduling information to the terminal, wherein the scheduling information schedules data transmission, and the data comprises data corresponding to the current data volume and/or data corresponding to the estimated data volume.

11. The method according to claim 10, wherein T1 is a time interval between a time unit in which the BSR is received and a next uplink time unit that meets a condition.

12. The method according to claim 11, wherein a downlink time unit is comprised between the next uplink time unit that meets the condition and the time unit in which the BSR is received, and a time interval between the downlink time unit and the uplink time unit is greater than or equal to a minimum time interval for scheduling uplink data sending.

13. The method according to any one of claims 10 to 12, wherein the BSR is carried by a first MAC PDU, the first MAC PDU further comprises a logical channel identifier, and the logical channel identifier is used to identify the BSR.

14. The method according to any one of claims 10 to 12, wherein the BSR is carried by a second MAC PDU, the second MAC PDU further comprises a reserved field, and the reserved field is used to identify the BSR.

15. The method according to any one of claims 10 to 14, wherein the receiving a BSR from a terminal comprises:
periodically receiving the BSR from the terminal.

16. The method according to any one of claims 10 to 15, wherein T1 is predefined, or T1 is configured by the network device.

17. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

18. A communication apparatus, comprising a processor, wherein the processor is coupled to a memory, the memory is configured to store a program or instructions, and when the program or the instructions are executed by the processor, the apparatus is enabled to perform the method according to any one of claims 10 to 16.

19. A data transmission apparatus, wherein the apparatus is used in a terminal, and the apparatus comprises:
a sending module, configured to send a buffer status report BSR to a network device, wherein the BSR indicates a data volume (N1+N2), N1 indicates a current data volume in a buffer of the terminal, N2 indicates an estimated data volume of the terminal within a time interval T1, N1≥0, N2≥0, and T1>0; and
a receiving module, configured to receive scheduling information from the network device, wherein
the sending module is further configured to send data to the network device based on the scheduling information, wherein the data comprises data corresponding to the current data volume and/or data corresponding to the estimated data volume.

20. The apparatus according to claim 19, wherein T1 is a time interval between a time unit in which the BSR is sent and a next uplink time unit that meets a condition.

21. The apparatus according to claim 20, wherein a downlink time unit is comprised between the next uplink time unit that meets the condition and the time unit in which the BSR is sent, and a time interval between the downlink time unit and the uplink time unit is greater than or equal to a minimum time interval for scheduling uplink data sending.

22. The apparatus according to any one of claims 19 to 21, wherein the sending module is further configured to:
determine the estimated data volume based on a data periodicity, a packet size of the data, and a previous arrival time of the data; or
determine the estimated data volume based on a data periodicity and a previous arrival time of the data.

23. The apparatus according to any one of claims 19 to 22, wherein the BSR is carried by a first media access control MAC protocol data unit PDU, the first MAC PDU further comprises a logical channel identifier, and the logical channel identifier is used to identify the BSR.

24. The apparatus according to any one of claims 19 to 22, wherein the BSR is carried by a second MAC PDU, the second MAC PDU further comprises a reserved field, and the reserved field is used to identify the BSR.

25. The apparatus according to any one of claims 19 to 24, wherein the sending module is specifically configured to:
periodically send the BSR to the network device.

26. The apparatus according to any one of claims 19 to 24, wherein the sending module is specifically configured to:
send the BSR to the network device when there is remaining data in the buffer of the terminal that has not been transmitted, or when a data packet is expected to arrive within the time interval T1.

27. The apparatus according to any one of claims 19 to 26, wherein T1 is predefined, or T1 is configured by the network device.

28. A data transmission apparatus, wherein the apparatus is used in a network device, and the apparatus comprises:
a receiving module, configured to receive a buffer status report BSR from a terminal, wherein the BSR indicates a data volume (N1+N2), N1 indicates a current data volume in a buffer of the terminal, N2 indicates an estimated data volume of the terminal within a time interval T1, N1≥0, N2≥0, and T1>0; and
a sending module, configured to send scheduling information to the terminal, wherein the scheduling information schedules data transmission, and the data comprises data corresponding to the current data volume and/or data corresponding to the estimated data volume.

29. The apparatus according to claim 28, wherein T1 is a time interval between a time unit in which the BSR is received and a next uplink time unit that meets a condition.

30. The apparatus according to claim 29, wherein a downlink time unit is comprised between the next uplink time unit that meets the condition and the time unit in which the BSR is received, and a time interval between the downlink time unit and the uplink time unit is greater than or equal to a minimum time interval for scheduling uplink data sending.

31. The apparatus according to any one of claims 28 to 30, wherein the BSR is carried by a first MAC PDU, the first MAC PDU further comprises a logical channel identifier, and the logical channel identifier is used to identify the BSR.

32. The apparatus according to any one of claims 28 to 30, wherein the BSR is carried by a second MAC PDU, the second MAC PDU further comprises a reserved field, and the reserved field is used to identify the BSR.

33. The apparatus according to any one of claims 28 to 32, wherein the receiving module is specifically configured to:
periodically receive the BSR from the terminal.

34. The apparatus according to any one of claims 28 to 33, wherein T1 is predefined, or T1 is configured by the network device.

35. A communication apparatus, wherein the apparatus comprises a module configured to perform the method according to any one of claims 1 to 9.

36. A communication apparatus, wherein the apparatus comprises a module configured to perform the method according to any one of claims 10 to 16.

37. A computer-readable storage medium, wherein the computer-readable storage medium stores instructions, and when the instructions are executed, a computer is enabled to perform the method according to any one of claims 1 to 9, or perform the method according to any one of claims 10 to 16.

38. A computer program product, comprising computer program code, wherein when the computer program code is run, the method according to any one of claims 1 to 9 is implemented, or the method according to any one of claims 10 to 16 is performed
